# EUROPÄISCHE PATENTSCHRIFT

(11) **EP 0 633 845 B1**
(45) Veröffentlichungstag und Bekanntmachung des Hinweises auf die Patenterteilung: **13.03.1996**
(21) Anmeldenummer: 93907865.5
(22) Anmeldetag: 01.04.1993
(51) Int. Cl.: B60N 2/54

(54) **SITZ, INSBESONDERE FAHRZEUGSITZ**
SEAT, IN PARTICULAR FOR VEHICLES
SIEGE, NOTAMMENT DE VEHICLE

(30) Priorität: 03.04.1992 DE 4211093
(43) Veröffentlichungstag der Anmeldung: 18.01.1995
(73) Patentinhaber: GRAMMER AG, D-92224 Amberg (DE)
(72) Erfinder: MEILLER, Hermann, D-8450 Amberg (DE); MAYER, Matthias, D-8450 Amberg (DE); HÖRNER, Josef, D-8400 Regensburg (DE)
(74) Vertreter: LOUIS, PÖHLAU, LOHRENTZ & SEGETH
(86) Internationale Anmeldenummer: EP9300787
(87) Internationale Veröffentlichungsnummer: WO9319950

(56) Entgegenhaltungen:
- DE-A- 1 530 670
- DE-A- 2 305 582
- DE-C- 598 748
- FR-A- 773 617
- GB-A- 2 057 260
- GB-A- 2 169 504
- US-A- 3 761 045

## Beschreibung

Die Erfindung betrifft einen Sitz, insbesondere Fahrzeugsitz, mit einer Federeinrichtung, deren Federungscharakteristik wunschgemäß einstellbar ist, wobei der Sitz eine L-förmige Basiseinrichtung mit einem Bodenelement und einem vom Bodenelement nach oben stehenden Rückenelement aufweist und zwischen dem Bodenelement und der Sitzplatte des Sitzes ein Scherengestell vorgesehen ist.

Bei derartigen Sitzen ist für die Federeinrichtung oftmals nur ein relativ kleiner Platz vorhanden, so daß eine entsprechend kleine Federeinrichtung zur Anwendung gelangen muß. Solche kleine bzw. kurze Federeinrichtungen weisen jedoch normalerweise ein hartes Federungsverhalten, d.h. eine harte Federungscharakteristik auf, was als nachteilig zu betrachten ist.

Ein gattungsgemäßer Sitz ist aus der US-A 3 761 045 bekannt. Bei diesem bekannten Sitz ist die Federeinrichtung im Rückenelement der Basiseinrichtung angeordnet. Die Vorspannung der Federeinrichtung ist einstellbar, wodurch eine Gewichtseinstellung des Sitzes möglich ist. Auch bei diesem bekannten Sitz gilt, daß infolge des für die Federeinrichtung vorhandenen Platzangebotes üblicherweise eine relativ kurze Federeinrichtung zur Anwendung gelangt, was ein mehr oder weniger hartes Federungsverhalten bewirkt.

Die FR-A 773 617 zeigt z.B. in Fig. 6 einen Sitz mit einer Federeinrichtung, die zwischen einem vertikalen Rückenelement einer Basiseinrichtung und dem Sitz vorgesehen ist. Die Federeinrichtung ist mit einem flexiblen Element verbunden, das um eine am Sitz vorgesehene Umlenkrolle umgelenkt ist.

Aus der DE-PS 598 748 ist ein als Soziussitz für Motorräder und andere Fahrzeuge dienender Schwingsattel mit unter der Satteldecke liegenden Zugfedern bekannt, die mit dem einen Ende an einem festen Punkt am Untergestell des Soziussitzes kugelgelenkartig befestigt und mit dem anderen Ende an einem Ansatz ein Pendelhebel in Rasten, von Hand verstellbar, aufgehangen sind. Zwecks Einstellung der Federn während der Fahrt weist die Achse bzw. Welle, welche die verstellbaren Federenden mittels durchbohrter Kloben drehbar aufnimmt, an zwei Stellen fest mit der Welle verbundene Zahnstücke auf, die ihrerseits in entsprechende Zahnrasten an den beiden Pendelhebelansätzen eingreifen. Dort ist durch Verstellen des Handhebels eine Verschwenkung des Pendelhebels um seine Lagerachse möglich, wodurch die Federeinrichtung mehr oder weniger gespannt und somit die Federcharakteristik wunschgemäß einstellbar ist. Es geht dort jedoch nicht um einen Sitz der gattungsgemäßen Art.

Die GB-A 2 169 504 offenbart eine Federungseinrichtung für einen Sitz bzw. für einen Sitz der eingangs genannten Art, wobei es durch Veränderung der Vorspannung der Federeinrichtung möglich ist, die Federungseigenschaften des Sitzes wunschgemäß einzustellen. Auch bei diesem bekannten Sitz gelten die weiter oben erwähnten Überlegungen, daß eine relativ kurze Federeinrichtung ein entsprechend hartes Federungsverhalten bewirkt.

Einen gefederten Fahrersitz für Schlepper, dessen Sitzschale über eine einerseits fest an der Sitzschale angebrachte, andererseits an einem fahrzeugfesten Teil angelenkte Schwinge und eine zwischen der Schwinge und einem fahrzeugfesten Teil angeordnete Gasfeder gegenüber dem Fahrgestell abgestützt ist, ist aus der DE-AS 1 530 670 bekannt. Dort ist an der Unterseite der Sitzschale ein an seinem nach unten weisenden freien Ende eine mit ihrem anderen Ende an einem höher gelegenen fahrzeugfesten Teil angeordnete Zugfederanordnung tragender, in eine etwa waagrecht nach vorne weisende Lage bringbarer Verstellhebel angelenkt. Eine Verschwenkung des besagten Verstellhebels bewirkt eine entsprechende lineare Veränderung der Länge der Zugfederanordnung und somit eine lineare Veränderung der Härte der Federungscharakteristik des Sitzes.

Der Erfindung liegt die Aufgabe zugrunde, einen Sitz der eingangs genannten Art zu schaffen, der trotz der Anwendung einer kurzen Federeinrichtung und demzufolge einer relativ harten Federungscharakteristik bei entsprechender Einstellung ein weiches Federungsverhalten aufweist.

Diese Aufgabe wird erfindungsgemäß dadurch gelöst, daß am Rückenelement ein zweiarmiger Schwenkhebel um eine zentrale Lagerachse verschwenkbar gelagert ist, an dessen einem Arm eine mindestens eine Zugfeder aufweisende Federeinrichtung mit ihrem einen Endabschnitt festgelegt ist, deren zweiter Endabschnitt mit der Lagerachse axial mindestens annähernd fluchtend an einem Befestigungsabschnitt eines Stützhebels festgelegt ist, der in der Nachbarschaft des die Federeinrichtung aufweisenden ersten Arms des Schwenkhebels vorgesehen und mit einem an seinem einen Ende vorgesehenen Lagerabschnitt am Rückenelement schwenkbar gelagert und mit seinem zweiten Ende mit dem Scherengestell gelenkig verbunden ist, wobei der Schwenkhebel und die mindestens eine Zugfeder in der normalen Ruhestellung des Sitzes mindestens annähernd horizontal vorgesehen sind, und der zweite Arm des Schwenkhebels zur Einstellung des Federungsverhaltens mit einem Betätigungsgriff ausgebildet ist. Eine solche Ausbildung weist den Vorteil auf, daß angepaßt an die Quer- bzw. Breitenabmessungen des Sitzes bzw. des Rückenelementes der L-förmigen Basiseinrichtung eine Federeinrichtung mit mindestens einer Zugfeder vorgesehen werden kann, wobei die/jede Zugfeder infolge ihrer relativ kurzen axialen Abmessungen ein hartes Federungsverhalten aufweisen kann. In der normalen Ruhestellung des Schwenkhebels, in welcher der Schwenkhebel und die Federeinrichtung mindestens annähernd horizontal orientiert sind, wird die Federeinrichtung bei einer Belastung des Scherengestells des Sitzes quasi nicht gedehnt, was bedeutet, daß in dieser Position des Schwenkhebels ein sehr weiches Federungsverhalten gegeben ist. Wird der Schwenkhebel jedoch um seine zentrale Lagerachse verschwenkt, so ergibt sich bei einer entsprechenden Belastung des Scherengestells eine Dehnung der Federeinrichtung und demzufolge ein härteres Federungsverhalten des Sitzes.

Neben dem besonderen Vorteil eines möglichen weichen Federverhaltens bei Verwendung einer an sich harten Federeinrichtung ergibt sich erfindungsgemäß der weitere Vorteil, daß die Verstellung des Schwenkhebels jederzeit schnell möglich ist, was bislang beispielsweise bei Anwendung von Spindeltrieben zur Gewichtseinstellung des Sitzes nicht der Fall ist.

Eine einfache Ausbildung ergibt sich, wenn der Stützhebel am Rückenelement linear verschiebbar schwenkbeweglich gelagert ist. Zu diesem Zweck kann der Stützhebel mit einem Ansatz ausgebildet sein, der einfach in ein zugehöriges Loch im Rückenelement der Basiseinrichtung des Sitzes eingesteckt ist. Desgleichen wäre es möglich, den Stützhebel am Rückenelement der Basiseinrichtung nicht linear sondern nur verschwenkbar zu lagern und dafür den Stützhebel selbst in seiner Länge teleskopartig veränderbar auszubilden. Das Rückenelement der L-förmigen Basiseinrichtung des Sitzes dient gleichzeitig auch zur linearbeweglichen Führung der Rückenlehne des auf der Basiseinrichtung mittels des Scherengestells angeordneten Sitzes.

Wie bereits erwähnt worden ist, weist beim erfindungsgemäßen Sitz die Federeinrichtung vorzugsweise mindestens eine Zugfeder großer Federkonstante auf, was bedeutet, daß die/jede Zugfeder relativ kompakt sein kann und demzufolge am Sitz nur einen kleinen Einbauraum benötigt.

Ein weiter verbesserter Sitzkomfort ist beim erfindungsgemäßen Sitz realisierbar, wenn zur Federeinrichtung mindestens annähernd parallel zwischen dem Schwenkhebel und dem Stützhebel eine Dämpfungseinrichtung vorgesehen ist.

Als vorteilhaft hat es sich erwiesen, wenn der Befestigungsabschnitt des Stützhebels mit einem Endabschnitt eines Zentralelementes des Scherengestells gelenkig verbunden ist, das mit seinem gegenüberliegenden zweiten Endabschnitt am Bodenelement der Basiseinrichtung schwenkbeweglich gelagert ist, wobei das Scherengestell vorzugsweise außer dem Zentralelement zwei Streifenelemente aufweist, die seitlich neben dem Zentralelement vorgesehen sind und die eine die Ebene des Zentralelementes kreuzende Ebene bildend miteinander mittels eines auf dem Zentralelement aufliegenden Verbindungselementes verbunden sind. Das Zentralelement des Scherengestells kann hierbei als Flächenelement oder als Rahmen ausgebildet sein, um eine entsprechende Gewichtsreduktion zu bewirken.

Insgesamt ergibt sich ein Sitz, insbesondere Fahrzeugsitz, einfachen Auf- und Zusammenbaus, bei dem das Federungsverhalten zeit- und kraftsparend wunschgemäß einstellbar ist, wobei gleichzeitig ein weiches Federungsverhalten und eine leichtgängige Verstellung mit einer schnellen Verstellbarkeit erreichbar bzw. gegeben ist.

Ausführungsbeispiele des erfindungsgemäßen Sitzes, insbes. Fahrzeugsitzes, sind in der Zeichnung schematisch dargestellt und werden nachfolgend beschrieben.

Es zeigen -:
- Figur 1: eine schematische Seitenansicht des Sitzes,
- Figur 2: eine Vorderansicht des Sitzes gemäß Figur in Blickrichtung des Pfeiles II, wobei auf die Darstellung der Sitzplatte und der Rückenlehne des Sitzes verzichtet worden ist,
- Figur 3: eine Ansicht der wesentlichen Teile des Sitzes gemäß Figur 2 in Blickrichtung des Pfeiles III von oben,
- Fig. 4: einen Abschnitt einer Ausführungsform des Sitzes ähnlich der in Fig. 2 gezeichneten Ausbildung,
- Fig. 5: eine der Fig. 4 ähnliche abschnittweise Darstellung einer weiteren Ausführungsform des Sitzes,
- Fig. 6: einen Schnitt entlang der Schnittlinie VI-VI in Fig.4, und
- Fig. 7: einen Schnitt entlang der Schnittlinie VII-VII in Fig. 5.

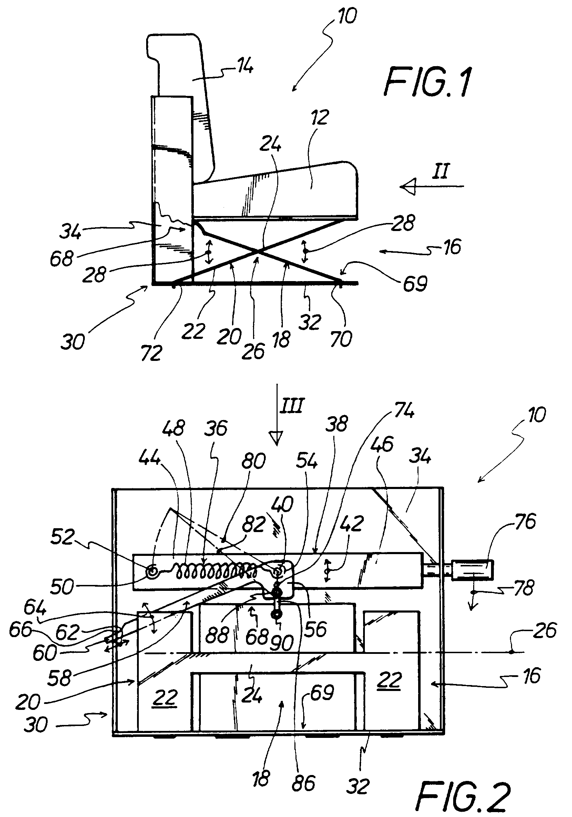

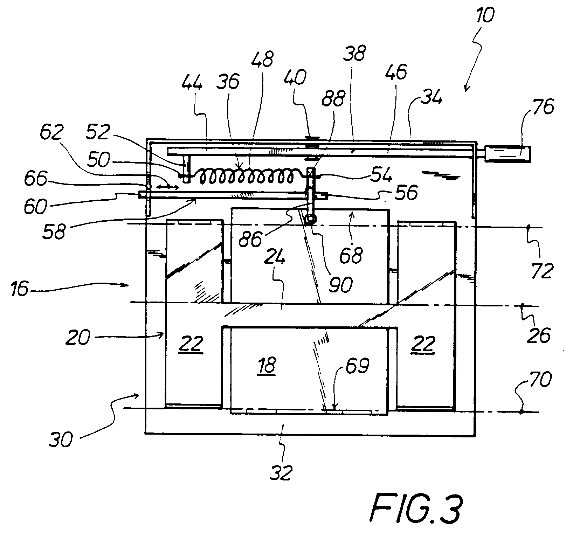

Figur 1 zeigt schematisch in einer Seitenansicht einen Sitz 10, insbesondere einen Fahrzeugsitz, der eine Sitzplatte 12 und eine von der Sitzplatte 12 nach oben stehende Rückenlehne 14 aufweist. Die Sitzplatte 12 ist auf einem Scherengestell 16 angeordnet, das sich überkreuzende Scherenelemente 18 und 20 aufweist. Das Scherenelement 18 ist als Flächen- oder Rahmenelement ausgebildet, wie z.B. aus den Figuren 2 und 3 ersichtlich ist. Das Scherenelement 20 weist zwei das Scherenelement 18 seitlich einschließende Streifenelemente 22 auf, die miteinander mittels eines Verbindungselementes 24 verbunden sind, das auf dem Scherenelement 18 entlang einer Linienberührung aufliegt und eine Scherengestellachse 26 bildet, um welche die beiden Scherenelemente 18 und 20 gegeneinander verschwenkbar sind, was in Figur 1 durch die beiden Doppelpfeile 28 angedeutet ist.

Das Scherengestell 16 ist auf einer L-förmigen Basiseinrichtung 30 angeordnet, die ein Bodenelement 32 und ein vom Bodenelement 32 nach oben stehendes Rückenelement 34 aufweist. Das Bodenelement 32 dient zur Lagerung des Scherengestelles 16 und das Rückenelement 34 dient zur linearen Führung des Rückenlehne 14 des Sitzes 10.

Mit dem Scherengestell 16 ist zur federnden Ausbildung des Sitzes 10 eine Federeinrichtung 36 verbunden, deren Ausbildung und Anordnung nachfolgend in Verbindung mit den Figuren 2 und 3 beschrieben wird.

Die Figuren 2 und 3 zeigen einen Schwenkhebel 38, der mittels einer Lagerachse 40, die in einem mittleren Bereich des Schwenkhebels 38 vorgesehen ist, am Rückenelement 34 der Basiseinrichtung 30 schwenkbar gelagert ist. Das ist in Figur 2 durch den bogenförmigen Doppelpfeil 42 angedeutet. Durch die Lagerachse 40 ergibt sich ein zweiarmiger Schwenkhebel 38 mit einem Hebelarm 44 und einem zweiten Hebelarm 46. Am von der Lagerachse 40 entfernten Endabschnitt des ersten Hebelarms 44 ist eine die Federeinrichtung 36 bildende Zugfeder 48 mit ihrem einen Befestigungsende 50 befestigt. Zu diesem Zweck ist der Hebelarm 44 bspw. mit einem Befestigungsstift 52 ausgebildet. Das zweite Befestigungsende 54 der Zugfeder 48 ist an einem Befestigungsabschnitt 56 eines Stützhebels 58 festgelegt, wobei der Stützhebel 58 in einem Abstand vor dem Schwenkhebel 38 vorgesehen ist (sh. Fig. 3). Der Stützhebel 58 ist mit einem vom Befestigungsabschnitt 56 entfernten Lagerabschnitt 60 am Rückenelement 34 der L-förmigen Basiseinrichtung 30 linear (Pfeil 62 in den Figuren 2 und 3) und schwenkbeweglich (Pfeil 64 in Fig. 2) gelagert. Zu diesem Zweck ist das Rückenelement 34 mit einem Loch 66 ausgebildet, in das der Lagerabschnitt 60 des Stützhebels 58 hineinsteht.

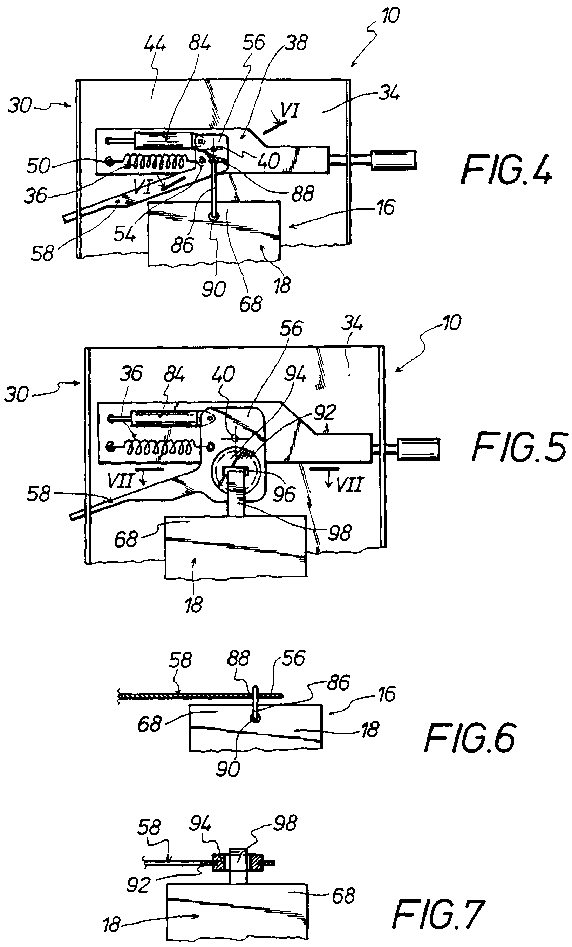

Der Befestigungsabschnitt 56 des Stützhebels 58 ist mit dem einen Endabschnitt 68 des Scherenelementes 18 des Scherengestells 16 gelenkig verbunden. Mögliche Ausbildungen der gelenkigen Verbindung zwischen dem Befestigungsabschnitt 56 des Stützhebels 58 und dem besagten ersten Endabschnitt 68 des Scherenelementes 18 des Scherengestells 16 sind auch in den Figuren 4 bis 7 gezeichnet und werden weiter unten in Verbindung mit diesen Figuren näher erläutert.

Der dem erstem Endabschnitt 68 gegenüberliegende zweite Endabschnitt 69 des Scherenelementes 18 (sh. auch Fig.1) ist am Bodenelement 32 der Basiseinrichtung 30 um eine Lagerachse 70 (sh. die Figuren 1 und 3) schwenkbar gelagert. Das zweite Scherenelement 20 ist am Bodenelement 32 der Basiseinrichtung 30 um eine zur Lagerachse 70 parallele Lagerachse 72 (sh. die Figuren 1 und 3) verschwenkbar angeordnet.

In Figur 2 sind der Schwenkhebel 38 und die Zugfeder 48 mindestens annähernd horizontal angeordnet. Wenn in dieser Stellung des Schwenkhebels 38 der Sitz 10 belastet wird, d.h. wenn auf dem Sitz 10 bspw. ein Sitzbenutzer Platz nimmt, wird das Scherengestell 16 entsprechend zusammengeschwenkt (Doppelpfeile 28 in Fig. 1), d.h. der Befestigungsabschnitt 56 des Stützhebels 58 bewegt sich entsprechend dem ersten Endabschnitt 68 des Scherenelementes 18 in Richtung des Pfeiles 74 (sh. Figur 2) vertikal nach unten. Hierbei wird die Zugfeder 48 quasi nicht gedehnt, was bedeutet, daß in der in Figur 2 gezeichneten horizontalen Stellung des Schwenkhebels 38 auch bei Verwendung einer harten Zugfeder 48 ein weiches Federungsverhalten gegeben ist. Wird der Schwenkhebel 38 jedoch mit Hilfe eines von seinem zweiten Hebelarm 46 wegstehenden Betätigungsgriffes 76 um die zentrale Lagerachse 40 in Richtung des Pfeiles 78 (sh. Fig.2) nach unten verschwenkt, so kommt die Zugfeder 48 z.B. in einer durch die strichlierte Linie 80 angedeuteten Position zu liegen. Wenn in dieser Stellung der Sitz 10 belastet wird bzw. auf dem Sitz 10 ein Sitzbenutzer Platz nimmt, ergibt sich - wie aus Figur 2 ohne weiteres ersichtlich ist - entsprechend der Bewegung des Scherenelementes 18 und des Befestigungsabschnittes 56 des Stützhebels 58 eine Bewegung in Richtung des Pfeiles 74 und somit eine entsprechende Verlängerung der Zugfeder 48, die durch die strichpunktierte Linie 82 angedeutet ist. Diese Verlängerung der Zugfeder 48 entspricht einem härteren Federungsverhalten derselben.

Erfindungsgemäß ergibt sich also ein Sitz 10, bei dem jede gewünschte Federungscharakteristik, d.h. jedes gewünschte Federungsverhalten, kraftsparend und schnell einstellbar ist, wobei mit einer harten Feder auch ein weiches Federungsverhalten erzielbar ist.

Fig. 4 zeigt abschnittweise Teile des Sitzes 10, d.h. abschnittweise das Rückenelement 34 der Basiseinrichtung 30, an welchem der Schwenkhebel 38 verschwenkbar gelagert ist. Am ersten Hebelarm 44 des Schwenkhebels 38 ist mit seinem ersten Befestigungsende 50 eine Federeinrichtung 36 festgelegt, bei der es sich um eine Zugfeder handelt. Mit ihrem zweiten Befestigungsabschnitt 54 ist die Federeinrichtung 36 ähnlich wie bei der in den Figuren 2 und 3 gezeichneten Ausführungsform des Sitzes 10 an einem Stützhebel 58 festgelegt. Mindestens annähernd parallel zur Federeinrichtung 36 ist zwischen dem ersten Hebelarm 44 des Schwenkhebels 38 und dem Stützhebel 58 bzw. dessen Befestigungsabschnitt 56 eine Dämpfungseinrichtung 84 angeordnet.

Der Befestigungsabschnitt 56 des Stützhebels 58 ist mit dem abschnittweise gezeichneten Scherenelement 18 des Scherengestells 16 mittels eines Klammer- oder Ringelementes 86 gelenkig verbunden. Zu diesem Zweck erstreckt sich das Klammer- oder Ringelement 86 beweglich durch ein Loch 88 im Befestigungsabschnitt 56 des Stützhebels 58 und durch ein Loch 90, das am ersten Endabschnitt 68 des Scherenelementes 18 vorgesehen ist.

Auf die Darstellung des zweiten Scherenelementes 20 mit den seitlich des Scherenelementes 18 vorgesehenen Streifenelementen 22 (sh. die Figuren 2 und 3) wurde in Fig. 4 verzichtet.

Der Stützhebel 58 ist am Rückenelement 34 der Basiseinrichtung 30 ähnlich gelagert wie bei der in den Figuren 2 und 3 gezeichneten Ausführungsform des Sitzes 10,so daß es sich erübrigt, hierauf noch einmal detailliert einzugehen.

Fig. 6 zeigt abschnittweise geschnitten den Stützhebel 58 und abschnittweise das Scherenelement 18 mit dem am ersten Endabschnitt 68 vorgesehenen Loch 90, durch das sich das Klammer- oder Ringelement 86 hindurcherstreckt, um das Scherenelement 18 des Scherengestelles 16 mit dem Befestigungsabschnitt 56 des Stützhebels 58 gelenkig zu verbinden. Mit der Bezugsziffer 88 ist auch in Fig. 6 das im Befestigungsabschnitt 56 des Stützhebels 58 vorgesehene Loch bezeichnet, durch das sich das Klammer- oder Ringelement 86 beweglich hindurcherstreckt.

Eine andere Möglichkeit der gelenkigen Verbindung zwischen dem Stützhebel 58 bzw. dessen Befestigungsabschnitt 56 mit dem Scherenelement 18 bzw. dessen erstem Endabschnitt 68 zeigen die Figuren 5 und 7. Bei dieser Ausführungsform ist der Befestigungsabschnitt 56 mit einem kreisrunden Loch 92 ausgebildet, in welchem eine Scheibe 94 dreh- und unverlierbar gelagert ist. Die Scheibe 94 ist mit einem Loch 96 ausgebildet, durch das sich ein bspw. hakenförmig ausgebildeter Ansatz 98 hindurcherstreckt, der vom ersten Endabschnitt 68 des Scherenelementes 18 einstückig wegsteht.

Im übrigen ist die Ausbildung des Sitzes 10 gemäß den Figuren 5 und 7 ähnlich der in den Figuren 4 und 6 gezeichneten Ausführungsform des Sitzes 10, so daß es sich erübrigt, alle weiteren Einzelheiten des Sitzes 10 noch einmal detailliert zu beschreiben.

In den einzelnen Figuren sind gleiche Einzelheiten jeweils mit denselben Bezugsziffern bezeichnet, so daß es sich erübrigt, in Verbindung mit den einzelnen Figuren alle Einzelheiten jeweils detailliert zu beschreiben.

## Patentansprüche

1. Sitz, insbesondere Fahrzeugsitz, mit einer Federeinrichtung (36), deren Federungscharakteristik wunschgemäß einstellbar ist, wobei der Sitz (10) eine L-förmige Basiseinrichtung (30) mit einem Bodenelement (32) und einem vom Bodenelement (32) nach oben stehenden Rückenelement (34) aufweist und zwischen dem Bodenelement (32) und der Sitzplatte (12) des Sitzes (10) ein Scherengestell (16) vorgesehen ist,
**dadurch gekennzeichnet,**
daß am Rückenelement (34) ein zweiarmiger Schwenkhebel (38) um eine zentrale Lagerachse (40) verschwenkbar gelagert ist, an dessen einem Arm (44) eine mindestens eine Zugfeder (48) aufweisende Federeinrichtung (36) mit ihrem einen Endabschnitt (50) festgelegt ist, deren zweiter Endabschnitt (54) mit der Lagerachse (40) axial mindestens annähernd fluchtend an einem Befestigungsabschnitt (56) eines Stützhebels (58) festgelegt ist, der in der Nachbarschaft des die Federeinrichtung (36) aufweisenden ersten Arms (44) des Schwenkhebels (38) vorgesehen und mit einem an seinem einen Ende vorgesehenen Lagerabschnitt (60) am Rückenelement (34) schwenkbar gelagert und mit seinem zweiten Ende mit dem Scherengestell (16) gelenkig verbunden ist, wobei der Schwenkhebel (38) und die mindestens eine Zugfeder (48) in der normalen Ruhestellung des Sitzes (10) mindestens annähernd horizontal vorgesehen sind, und der zweite Arm (46) des Schwenkhebels (38) zur Einstellung des Federungsverhaltens mit einem Betätigungsgriff (76) ausgebildet ist.

2. Sitz nach Anspruch 1,
**dadurch gekennzeichnet,**
daß der Stützhebel (58) am Rückenelement (34) linear verschiebbar schwenkbeweglich gelagert ist.

3. Sitz nach Anspruch 1 oder 2,
**dadurch gekennzeichnet,**
daß die Federeinrichtung (36) mindestens eine Zugfeder (48) großer Federkonstante aufweist.

4. Sitz nach einem der vorhergehenden Ansprüche,
**dadurch gekennzeichnet,**
daß zur Federeinrichtung (36) mindestens annähernd parallel zwischen dem Schwenkhebel (38) und dem Stützhebel (58) eine Dämpfungseinrichtung (84) vorgesehen ist.

5. Sitz nach einem der vorhergehenden Ansprüche,
**dadurch gekennzeichnet,**
daß der Befestigungsabschnitt (56) des Stützhebels (58) mit einem Endabschnitt (68) eines Zentralelementes (18) des Scherengestells (16) gelenkig verbunden ist, das mit seinem gegenüberliegenden zweiten Endabschnitt (69) am Bodenelement (32) der Basiseinrichtung (30) schwenkbeweglich gelagert ist, wobei das Scherengestell (16) außer dem Zentralelement (18) zwei Streifenelemente (22) aufweist, die seitlich neben dem Zentralelement (18) vorgesehen sind und die eine die Ebene des Zentralelementes (18) kreuzende Ebene bildend miteinander mittels eines auf dem Zentralelement (18) aufliegenden Verbindungselementes (24) verbunden sind.

## Claims

1. Seat, in particular vehicle seat, having a spring device (36) of which the springing characteristic can be adjusted as required, the seat (10) exhibiting an L-shaped base arrangement (30) with a floor element (32) and a backrest element (34) projecting upwards from the floor element (32), and a scissors-type framework (16) being provided between the floor element (32) and the seat panel (12) of the seat (10), characterized in that a two-armed pivot lever (38) is mounted on the backrest element (34) such that it can be pivoted about a central bearing spindle (40), a spring device (36) which exhibits at least one tension spring (48) being fixed by means of one end section (50) on one arm (44) of said pivot lever, and the second end section (54) of said spring device (36) being fixed, by means of the bearing spindle (40), on a fastening section (56) of a supporting lever (58) in such a manner that it is at least virtually aligned axially, which supporting lever is provided in the vicinity of the first arm (44), which exhibits the spring device (36), of the pivot lever (38) and is mounted pivotably, by means of a bearing section (60) provided at one end, on the backrest element (34) and is connected in an articulated manner by means of its second end to the scissors-type framework (16), the pivot lever (38) and the at least one tension spring (48) being provided at least virtually horizontally in the normal rest position of the seat (10), and the second arm (46) of the pivot lever (38) being designed with an actuating grip (76) in order to adjust the springing behaviour.

2. Seat according to Claim 1, characterized in that the supporting lever (58) is mounted on the backrest element (34) such that it can be pivoted in a linearly displaceable manner.

3. Seat according to Claim 1 or 2, characterized in that the spring device (36) exhibits at least one tension spring (48) with a large spring constant.

4. Seat according to one of the preceding claims, characterized in that a damping device (84) is provided at least virtually parallel to the spring device (36), between the pivot lever (38) and the supporting lever (58).

5. Seat according to one of the preceding claims, characterized in that the fastening section (56) of the supporting lever (58) is connected in an articulated manner to an end section (68) of a central element (18) of the scissors-type framework (16), which central element is mounted pivotably, by means of its opposite second end section (69), on the floor element (32) of the base arrangement (30), the scissors-type framework (16) exhibiting, in addition to the central element (18), two strip elements (22) which are provided laterally next to the central element (18) and are connected to one another forming a plane which crosses the plane of the central element (18), by means of a connecting element (24) which bears on the central element (18).

## Revendications

1. Siège, en particulier siège de voiture, avec un dispositif de rappel (36) dont la caractéristique de rappel est réglable au gré de l'utilisateur, dans lequel le siège (10) comporte un système de base (30) en forme de L avec un élément au sol (32) et un élément de dossier (34) s'élevant vers le haut à partir de l'élément de sol (32), un système support en ciseau (16) étant placé entre l'élément de sol (32) et l'assise du siège (12),
caractérisé en ce que
l'élément de dossier (34) comporte un levier pivotant (38) à deux bras libre en rotation autour d'un axe central (40), dont l'un des bras (44) comporte un dispositif de rappel (36) comportant au moins un ressort de traction (48) qui est fixé audit bras à l'une de ses extrémités (50), la seconde extrémité (54) étant solidarisée d'une manière au moins approximativement alignée axialement avec l'axe (40) à un élément de fixation (56) d'un levier (58), ledit levier (58) étant situé au voisinage du premier bras (44) comportant le dispositif de rappel (36) et pouvant pivoter par rapport à l'élément de dossier (34) au niveau d'une extrémité équipée d'un élément support (60), sa seconde extrémité étant articulée avec le système en ciseau (16) de telle sorte que le levier pivotant (38) et le ressort de traction (48) sont disposés au moins approximativement horizontalement dans la position de repos normale du siège (10), le second bras (46) du levier pivotant (38) étant équipé d'une poignée de manoeuvre (76) destinée au réglage de l'opération de rappel.

2. Siège selon la revendication 1, caractérisé en ce que le levier 58 est relié à l'élément de dossier (34) de manière qu'il soit déplaçable linéairement par un mouvement de pivotement.

3. Siège selon la revendication 1 ou 2, caractérisé en ce que le dispositif de rappel (36) comporte au moins un ressort de traction (48) possédant une plus grande constante de rappel.

4. Siège selon l'une des revendications précédentes, caractérisé en ce que le dispositif de rappel (36) comporte un système d'amortissement qui lui est au moins approximativement parallèle et est situé entre le levier oscillant (38) et le levier (58).

5. Siège selon l'une des revendications précédentes, caractérisé en ce que l'élément de fixation (56) du levier (58) est relié à une extrémité (68) d'un élément central (18) du système en ciseau (16), lequel est solidarisé de manière pivotante au niveau de sa deuxième extrémité (69) à l'élément de sol (32) du système de base (30), le système en ciseau (16) présentant deux éléments en bande (22) placés à l'extérieur de l'élément central (18), latéralement par rapport audit élément central (18) et qui forment un plan qui croise le plan de l'élément central (18) du fait qu'ils sont reliés au moyen d'un élément de liaison (24) passant par dessus l'élément central (18).
